**Europäisches Patentamt**

**European Patent Office**

**Office européen des brevets**

(11) Publication number: **0 485 640 A1**

# EUROPEAN PATENT APPLICATION

(21) Application number: **90121536.8**

(22) Date of filing: **10.11.90**

(51) Int. Cl.5: **B62M 3/04**, B62M 3/02

(43) Date of publication of application:
**20.05.92 Bulletin  92/21**

(84) Designated Contracting States:
**AT BE CH DE DK ES FR GB GR IT LI LU NL SE**

(71) Applicant: **Wu, Ching-Jung**
**No. 13, Hsin Hsing Rd.**
**Tainan(TW)**

(72) Inventor: **Wu, Ching-Jung**
**No. 13, Hsin Hsing Rd.**
**Tainan(TW)**

(74) Representative: **Dickel, Klaus, Dipl.-Ing. et al**
**Julius-Kreis-Strasse 33**
**W-8000 München 60(DE)**

(54) Structure of bicycle chain transmission.

(57) A bicycle chain transmission, comprising a pedal link (4) adjustably fastened in a holder plate (30) mounted on the outer side of a chain wheel (3) and connected with a side projection (241) of a bearing block (24) which is mounted on an eccentric sleeve (2040) at the bottom of a bottom bracket bearing axle of a bicycle. The eccentric motion of the eccentric sleeve (2040) forces the bearing block (24) to rotate eccentrically so as to squeeze the pedal link (4) to adjust the length of its arm of force according to its angle position relative to the chain wheel (3), so that reduced labor consumption in pedaling can be achieved.

FIG. 2

## BACKGROUND OF THE INVENTION:

The present invention relates to bicycle chain transmissions, and more particularly relates to a bicycle chain transmission of which the arm of force of the pedal crank is so automatically changed that labor consumption in pedaling can be minimized.

In a regular bicycle chain transmission, a crank is generally fastened in a chain wheel at the center. During pedaling, the arm of force of a crank does not make any change. As it is known that longer arm of force of a crank can minimize energy consumption in forward pedaling. Therefore, there is a kind of chain structure designed in oval shape so that the arm of force of a crank can be automatically changed during its rotation. This type of design can effectively minimize energy consumption in pedaling. However, a chain may be easily disengaged from an oval shape of chain wheel during rotation.

## SUMMARY OF THE INVENTION:

The present invention has been accomplished under the circumstances in view. It is one object of the present invention to provide a bicycle chain transmission which can drive a bicycle to run with less labor consumption and without causing a chain to disengage.

According to the present invention, a bicycle chain transmission is generally comprised of a bottom bracket bearing device mounted on an eccentric sleeve at the bottom of the bottom bracket bearing axle of a bicycle. The eccentric rotation of the eccentric sleeve forces the bearing block of the bottom bracket bearing device to rotate eccentrically so as to further force the pedal link to automatically adjust the length of its arm of force according to its angle position relative to the chain wheel. Therefore, less labor consumption can be achieved during pedaling.

## BRIEF DESCRIPTION OF THE DRAWINGS:

Fig, 1 is a plan view of a bicycle chain wheel according to the prior art;

Fig, 2 is a perspective fragmentary view of the preferred embodiment of bicycle chain transmission according to the present invention;

Fig. 3 is a top view of the cylindrical connector;

Fig. 4 is a perspective and partly sectional view of the cylindrical connector;

Fig. 5 is a sectional elevational view of the cylindrical connector;

Fig. 6 is a sectional assembly view of the preferred embodiment according to the present invention;

Figs. 7 through 9 illustrate various positioning conditions of the two aligned parts of the pedal link in the cylindrical connector;

Fig. 10 illustrates the relative position of the eccentric sleeve, the spiral member and its connected bearings in the bearing block;

Fig. 11 is a sectional elevation taken on Fig. 10;

Figs. 12 through 14 illustrate the operation of the present invention.

## DETAILED DESCRIPTION OF THE [REFERRED EMBODIMENT:

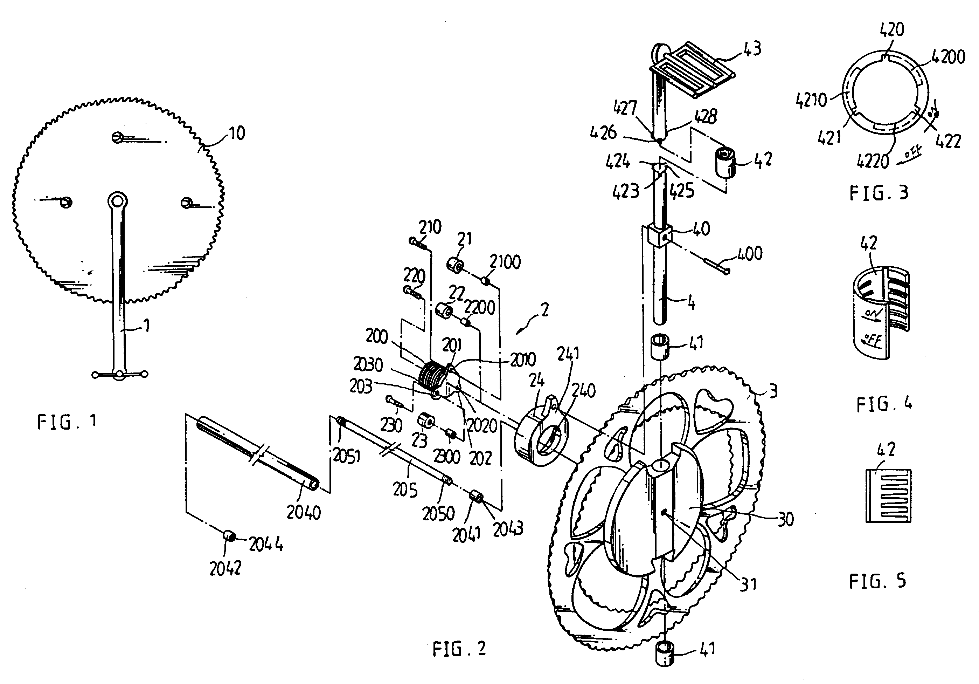

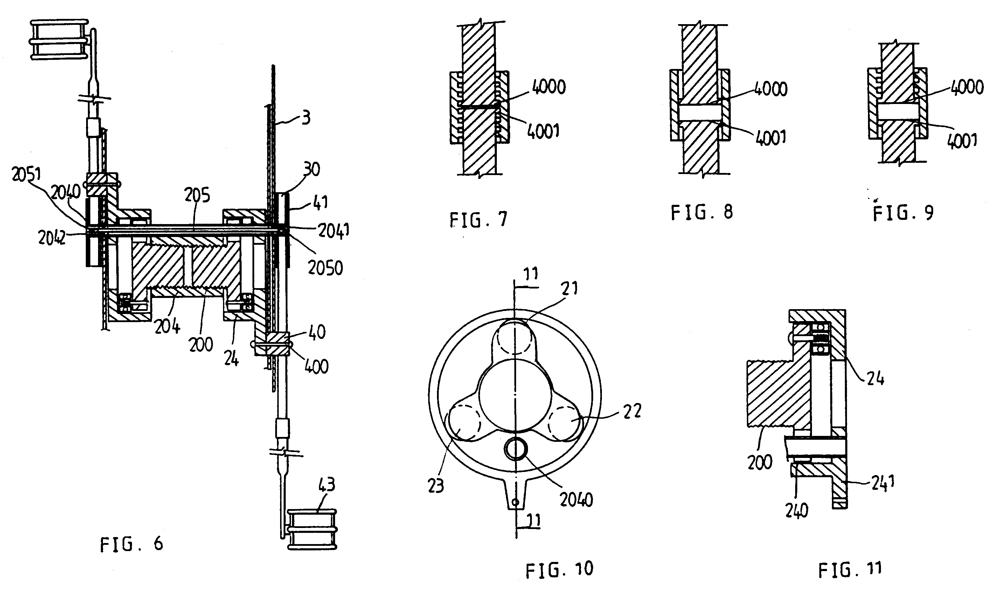

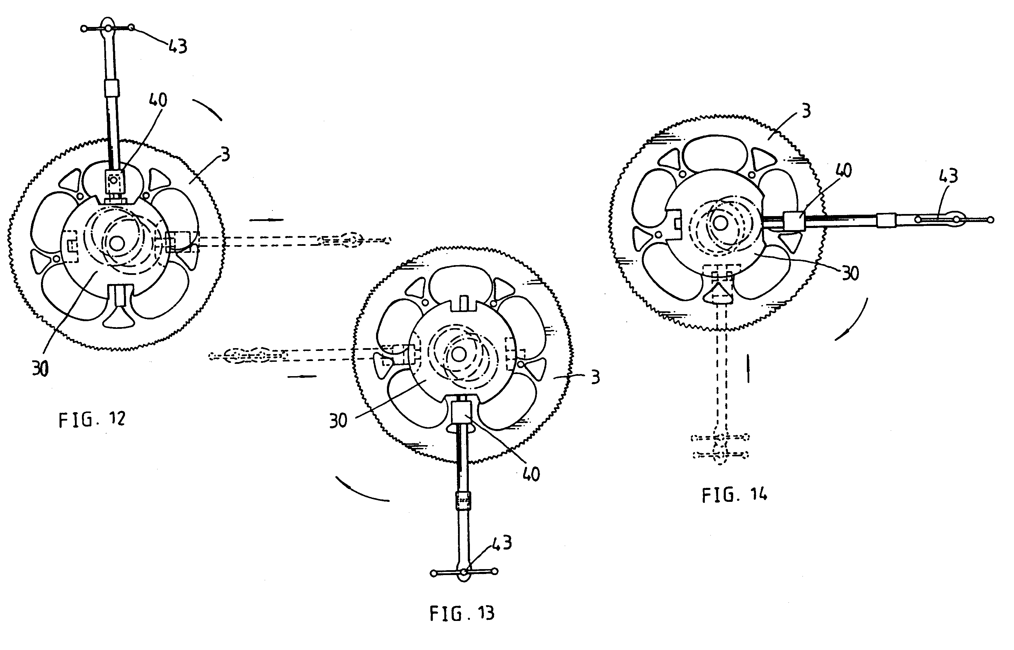

Referring to Figs. 2 and 6, a bicycle chain transmission in accordance with the present invention is generally comprised of bottom bracket bearing device 2, chain wheel 3 and pedal link 4. The bottom bracket bearing device 2 is comprised of a spiral member 20 which has three lugs 201, 202 and 203 at the front, a plurality of bearings 21, 22 and 23 which have each a bolt sleeve 2000, 2200 or 2300 fastened therein, and a bearing block 24 which has a center hole 240 for holding bearings. There are provided three screws 210, 220 and 230 respectively inserted through the round holes 2010, 2020 and 2030 on the lugs 201, 202 and 203, and screwed in the bolt sleeves 2100, 2200 and 2300 which are respectively fastened in the bearings 21, 22 and 23 and received inside the center hole 240 of the bearing block 24. The spiral member 20 has an outer thread 200 screwed up with the bolt hole 2040 of the bottom bracket bearing axle 204 of a bicycle. The bottom bracket bearing axle 204 has an eccentric sleeve 2040 (see Fig. 11) at the bottom. Two bearings 2041 and 2042 which have each a round hole through its central axis are respectively fastened inside the eccentric sleeve 2040 at two opposite ends. There is a round rod 205 which has two outer thread portions 2050 and 2051 at two opposite ends inserted in the eccentric sleeve 2040. After assembly, the outer thread portion 2050 or 2051 is fastened in the bolt hole 31 of the bottom bracket bearing device holder 30 which is mounted on the outer side of the chain wheel 3. Further, the bearing block 24 has a unitary side projection 241 at one end, which is inserted through the chain wheel 3 and secured to a fixed plate 40 on the crank 4 by a lock pin 400. The pedal link 4 is fastened in the device holder 30 and disposed in a vertical position against the bottom bracket bearing device 2. Two bearings 41 are mounted on the pedal link 4 and respectively disposed at two opposite sides of the device holder 30. The pedal link 4 is comprised of two parts longitudinally aligned with each other and adjustably connected together by a cylindrical connector 42 The cylindrical connector 42 comprises three grooves vertically made on the inner wall surface thereof and spaced from one another at an interval of 120angle, with a plurality of rows of tapered grooves 4200, 4210 and 4220 respectively transversely made therebetween (see Figs. 3,4 and 5) for fastening the projecting strips 423, 424, 425, and 426, 427, 428, of the two aligned parts of the pedal link 4. Therefore, the total length of the pedal link 4 can adjusted (see Figs. 7 through 9) as desired. Further, there is a pedal 43 attached to the pedal link 4 at one end, through which the chain wheel 3 is pedaled to rotate.

Referring to Figs. 7 through 9, while rotation of the bottom bracket bearing device 2, the bearing block 24 is carried to rotate eccentrically. The eccentric rotation of the bearing block 24 forces the pedal link 4 to change the length of its arm of force according to its angle position relative to the chain wheel 3.

Referring to Figs. 12, 13 and 14, when the pedal link 4 is moved forward from a vertical position to a horizontal position, the eccentric sleeve 2040 on the bottom bracket bearing axle 204 forces the bearing block 24 to rotate eccentrically. During the eccentric motion of the bearing block 24, the pedal link 4 is simultaneously pushed by the side projection 241 to extend outwards, so as to increase its arm of force. When the pedal link 4 is continuously rotated downward from a horizontal position to a vertically position, it is pulled back by the side projection 241 of the bearing block 24 to shorten its arm of force. When the pedal link 4 is rotated backwards from a vertical position to a horizontal position, the arm of force of the pedal link 4 is in a shortest form so that the pedal link 4 can be continuously rotated forward to a vertical position for next stroke, with less labor consumption.

As described above, the present invention is to provide such a bicycle chain transmission, in which the arm of force of the pedal link is automatically adjusted during its rotation so that labor consumption in pedaling can be minimized.

## Claims

1. A bicycle chain transmission, comprising:

    a bottom bracket bearing device comprising a bearing block having a hole at the center and a side projection at one end, a spiral member having three lugs at one end, a plurality of bearings having each a bolt sleeve respectively secured to said lugs and received in the center hole of said bearing block, said spiral member having an outer thread screwed up with a bolt hole made on on bottom bracket bearing axle of a bicycle, said bottom bracket bearing axle having an eccentric sleeve at the bottom, said eccentric sleeve having two bearings fastened at two opposite ends and a round rod inserted therethrough, said round rod having two outer thread portions at two opposite ends;

    a chain wheel assembly comprised of two sprocket wheels of different size connected together side by side, having a holder plate at one side, said holder plate having a bolt hole for fastening said outer thread portions of said round rod; and

    a pedal link movably inserted in said holder plate, having a fixed plate at the middle for connection thereto of said side projection of said bearing block, and a pedal attached thereto at one end for pedaling, said pedal link being comprised of two parts longitudinally aligned with each other and movably connected together by a cylindrical connector, said cylindrical connector comprising an inner wall having three grooves vertically made thereon and spaced from one another at equal interval with a plurality of rows of tapered grooves transversely made therebetween for alternatively fastening a plurality of projecting strips made on the connecting end of the two aligned parts of said pedal link;

    wherein the rotation of said eccentric sleeve forces said bearing block to rotate eccentrically, so as to drive said pedal link to automatically adjust its arm of force according to the angle position of said pedal link relative to said chain wheel assembly.

FIG. 3

FIG. 4

FIG. 5

FIG. 2

FIG. 1

EP 0 485 640 A1

FIG. 6

FIG. 7

FIG. 8

FIG. 9

FIG. 10

FIG. 11

FIG. 12

FIG. 13

FIG. 14

EP 0 485 640 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | DE-C-93076 (A.T.COLLIER) <br> * the whole document * <br> --- | 1 | B62M3/04 <br> B62M3/02 |
| Y | DE-U-9011789 (C. WU) <br> * page 3, line 23 - page 5, line 16; figures * <br> --- | 1 | |
| Y | FR-A-762606 (L.CHANDEZE) <br> * page 2, line 19 - page 2, line 77; figures * <br> --- | 1 | |
| A | BE-A-349753 (M.JUNGBLUTH) <br> * page 2, line 28 - page 4, line 8; figures * <br> ----- | 1 | |

TECHNICAL FIELDS
SEARCHED (Int. Cl.5 )

B62M

The present search report has been drawn up for all claims

| Place of search | Date of completion of the search | Examiner |
|---|---|---|
| THE HAGUE | 04 JULY 1991 | FRANKS B.G. |

EPO FORM 1503 03.82 (P0401)